Europäisches Patentamt

European Patent Office

Office européen des brevets

(11) Veröffentlichungsnummer: **0 264 041 B1**

# EUROPÄISCHE PATENTSCHRIFT

(45) Veröffentlichungstag der Patentschrift: **15.04.92**

(51) Int. Cl.5: **B01D 53/34**

(21) Anmeldenummer: **87114484.6**

(22) Anmeldetag: **05.10.87**

(54) **Verfahren und Anlage zur Rückgewinnung von Ammoniak beim Abscheiden von Stickoxiden aus Rauchgasen.**

(30) Priorität: **13.10.86 CH 4073/86**

(43) Veröffentlichungstag der Anmeldung:
**20.04.88 Patentblatt 88/16**

(45) Bekanntmachung des Hinweises auf die
Patenterteilung:
**15.04.92 Patentblatt 92/16**

(84) Benannte Vertragsstaaten:
**DE FR IT NL SE**

(56) Entgegenhaltungen:
**EP-A- 0 079 171**
**DE-A- 3 205 101**

(73) Patentinhaber: **VON ROLL AG**

**CH-4563 Gerlafingen(CH)**

(72) Erfinder: **Frey, Ruedi**
**Lägerstrasse 1**
**CH-8303 Bassersdorf(CH)**
Erfinder: **Rüegg, Hans**
**Bremgartenstrasse 55a**
**CH-5610 Wohlen(CH)**

(74) Vertreter: **EGLI-EUROPEAN PATENT ATTOR-NEYS**
**Horneggstrasse 4**
**CH-8008 Zürich(CH)**

## Beschreibung

Die Erfindung betrifft ein Verfahren zur Rückgewinnung von Ammoniak beim Abscheiden von Stickoxiden $NO_x$ aus bei der Verbrennung von brennbaren Materialien, insbesondere von fossilen Brennstoffen in einer Feuerungsanlage entstehenden Rauchgasen, wobei in einer Reaktionszone als reduzierendes Gas Ammoniak $NH_3$ in den Rauchgasstrom eingeleitet wird, durch welches die Stickoxidgase hierbei zu elementarem Stickstoff $N_2$ reduziert werden, wobei der Rauchgasstrom einer Nass-Rauchgaswäsche unterworfen wird, welche nach der Reaktionsphase durchgeführt wird, wobei durch das Waschwasser das nichtreagierte, als Schlupf bezeichnete Ammoniak aus dem Rauchgas entfernt wird, und eine Anlage zur Durchführung dieses Verfahrens.

Rauchgase enthalten in mehr oder weniger grossem Mass Oxide des Stickstoffes $NO_x$, vor allem Stickstoffmonoxid NO bis über 90%, welche bei der Verbrennung von Brennstoffen jeglicher Art, insbesondere von fossilen Brennstoffen, mit Luft entstehen. Werden die Rauchgase an die Atmosphäre abgegeben, ohne dass sie einer vorhergehenden Reinigung unterworfen werden, bildet sich aus den Stickstoffmonoxiden unter dem Einfluss von Sauerstoff aus der Luft und/oder aus den Rauchgasen Stickstoffdioxid $NO_2$. Durch Feuchtigkeit, insbesondere durch Regen, wird das Stickstoffdioxid, das ein leicht wasserlösliches Gas ist, als salpetrige Säure $HNO_2$ oder Salpetersäure $HNO_3$ ausgewaschen und trägt dadurch in nicht unbeträchtlichem Masse zur Bildung von saurem Regen bei. Ausserdem wird oder Ozongehalt der Atmosphäre durch eine photochemische Reaktion von Stickoxiden $NO_x$ erhöht.

Es sind verschiedene Verfahren zum Abscheiden von Stickoxiden aus Rauchgasen bekannt. Die am meisten angewandten Verfahren verwenden hierzu Ammoniak, welches in den Rauchgasstrom eingeleitet wird und dort mit den Stickoxiden reagiert und diese zu elementarem Stickstoff $N_2$ reduziert.

Bei einem bekannten Verfahren, das als SNCR-Verfahren (Selective Noncatalytic Reduction Process) bekannt ist, siehe EP-A-0.079.171, wird Ammoniakgas in den Brennraum einer Feuerungsanlage eingeleitet. Zur Ermöglichung der Reduktion der Stickoxide ist hierzu eine Temperatur von 700 - 1100°C erforderlich.

Bei einem weiteren bekannten Verfahren, das als SCR-Verfahren (Selective Catalytic Reduction Process) bezeichnet wird, siehe US-A 3 970 739, wird Ammoniak vor dem Einleiten des Rauchgasstromes in einen mit geeigneten Katalysatoren ausgerüsteten Reaktionsraum dem Rauchgasstrom zugemischt, wobei im Reaktionsraum Temperaturen von 150 - 700°C eingehalten werden.

Bei beiden Verfahren ist nicht zu vermeiden, dass eine gewisse Ammoniakmenge nicht mit dem Stickstoffmonoxid reagiert. Diese Menge ist umso grösser, je grösser der gewünschte Abscheidegrad ist, und kann Werte erreichen, die nach den bestehenden Vorschriften nicht mehr in die Atmosphäre geleitet werden dürfen. Der Stickoxid-Abscheidegrad der bekannten Verfahren wird demzufolge durch die noch erlaubten Ammoniakemissionen beschränkt.

Aufgabe der Erfindung ist es, ein Verfahren der eingangs beschriebenen Art so auszugestalten, dass ein hoher Stickoxid-Abscheidegrad bei gleichzeitig niedrigem Ammoniakverbrauch erreicht wird, ohne dass dadurch die Umwelt mit Ammoniak belastet wird.

Diese Aufgabe wird gemäss der Erfindung dadurch gelöst, dass der pH-Wert des Waschwassers, welches bei der Nass-Rauchgaswäsche durch Ammoniak $NH_3$ und Ammonium $NH_4$ angereichert wird, auf mehr als 10 angehoben wird und und dann das Ammoniak durch in das Waschwasser eingeleitete Luft ausgetrieben wird.

Die Erfindung betrifft auch eine Feuerungsanlage mit einem Ofen und einem Kessel, deren Aufgabe die Ermöglichung einer optimalen Rückgewinnung von Ammoniak beim Abscheiden von Stickoxiden aus der bei der Verbrennung von fossilen Brennstoffen und anderen Materialien entstehenden Rauchgase ist. Diese Aufgabe wird gemäss der Erfindung dadurch gelöst, dass im Ofen oder in der Austrittsleitung des Kessels eine Zuleitung zur Einleitung von Ammoniak in den Rauchgasstrom vorgesehen ist, wobei eine dieser Zuleitung nachgeschaltete Nass-Rauchgaswaschanlage in der Rauchgasleitung durch eine Verbindungsleitung mit einer Strippkolonne verbunden ist, an welcher eine Luftzuleitung mündet und ein Luftaustritt angeschlossen ist, wobei dieser Luftaustritt mit einer Zuleitung zum Ofen verbunden ist.

Drei Ausführungsbeispiele der Erfindung sind in der Zeichnung dargestellt und nachfolgend beschrieben. Es zeigen:

Fig. 1    eine erste Ausführungsform einer Anlage zum Abscheiden von Stickoxiden aus Rauchgasen durch Einleitung von Ammoniak in den Rauchgasstrom,

Fig. 2    eine zweite Ausführungsform einer Anlage zum Abscheiden von Stickoxiden aus Rauchgasen durch Einleitung von Ammoniak in den Rauchgasstrom und

Fig. 3    eine dritte Ausführungsform einer Anlage zum Abscheiden von Stickoxiden aus Rauchgasen durch Einleitung von Ammoniak in den Rauchgasstrom.

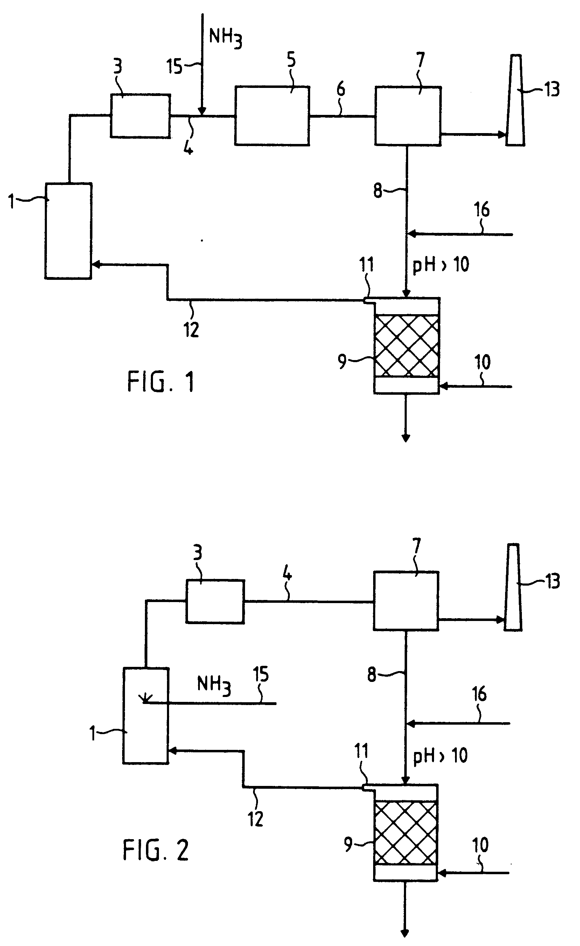

Die in Fig. 1 dargestellte Anlage weist einen Ofen 1 auf, in welchem brennbare Materialien, insbesondere fossile Brennstoffe, verbrannt werden. Die hierbei entstehenden Rauchgase werden zu einem an dem Ofen 1 anschliessenden Kessel 3 geführt, in dessen Austrittsleitung 4 Ammoniakgas NH₃ über eine Zuleitung 15 eingeleitet wird. Dieses Gasgemisch wird einem Reaktionsraum 5, wie er beim SCR-Verfahren verwendet wird, zugeführt, in welchem die Stickoxid-Abscheidung, d.h. die Reduktion der Stickoxide durch das Ammoniak, erfolgt.

Die aus dem Reaktionsraum 5 austretenden Rauchgase gelangen über eine Leitung 6 in eine Nass-Waschanlage 7, in welcher das nichtreagierte Ammoniak in dem Waschwasser gelöst wird. Das Ammoniak verbindet sich dabei mit den vorhandenen sauren Bestandteilen des Wassers zu Ammoniumsalzen.

Da verhindert werden soll, dass Ammoniak oder Ammoniumverbindungen auf dem Umweg über das Waschwasser die Nass-Waschanlage 7 verlassen und in die Umwelt gelangen, wird der pH-Wert des mit Ammoniumionen angereicherten Waschwassers aus der Nass-Waschanlage 7 auf einen Wert von grösser als 10 angehoben, z.B. durch Zufügung von Kalk durch eine Leitung 16. Dadurch wird erreicht, dass das Reaktionsgleichgewicht in der nachstehenden Gleichung sehr stark nach rechts verschoben wird.

$$NH_4 + OH \rightleftarrows NH_3 + H_2O$$

Demnach liegt das abgeschiedene Ammoniak nun in der Lösung wiederum als Ammoniak vor.

Das gelöste Ammoniak wird in einem weiteren Verfahrensschritt desorbiert und als Gas aus dem Waschwasser ausgetrieben. Dazu wird in einem als "Strippen" (siehe Ullmann Enzyklopädie der technischen Chemie Bd. 2, 1972, S. 587) bezeichneten Vorgang ein inniger Kontakt zwischen dem Waschwasser und der Luft herbeigeführt, wodurch das Ammoniak aus dem Waschwasser in die Luft übergeführt werden kann. Hierzu wird das Waschwasser durch eine Verbindungsleitung 8 einer Strippkolonne 9 zugeführt, die mit einer Luftzuleitung 10 und mit einem Luftaustritt 11 versehen ist. Der Luftaustritt 11 ist mit einer Zuleitung 12 verbunden, welche mit dem Ofen 1 verbunden ist. Auf diese Weise wird das im Waschwasser enthaltene Ammoniak in die Luft übergeführt, welche direkt wieder als Verbrennungsluft in den Ofen 1 eingeleitet wird, z.B. als Sekundärluft in die Rauchgase.

Die die Nass-Waschanlage 7 verlassenden Rauchgase können durch ein Kamin 13 in die Atmosphäre entlassen werden.

Während die Anlage nach Fig. 1 entsprechend dem SCR-Verfahren einen Reaktionsraum 5 benötigt, vor dessen Eintrittseite das Ammoniak durch die Zuleitung 15 zugeführt wird, weist die Anlage nach Fig. 2 entsprechend dem SNCR-Verfahren keinen separaten Reaktionsraum auf. Das Ammoniak wird hier durch die Ammoniakzuleitung 15 direkt in den Ofen 1 oder in den Kanal 3 eingeleitet. Dagegen sind die Teile der Anlage zur Erzielung eines hohen Stickoxid-Abscheidegrades der Nass-Waschanlage 7, d.h. die Verbindungsleitung 8, die Strippkolonne 9 mit der Luftzuleitung 10 und dem Luftaustritt 11 sowie die Ammoniakrückführung 12 gleich wie in Fig. 1

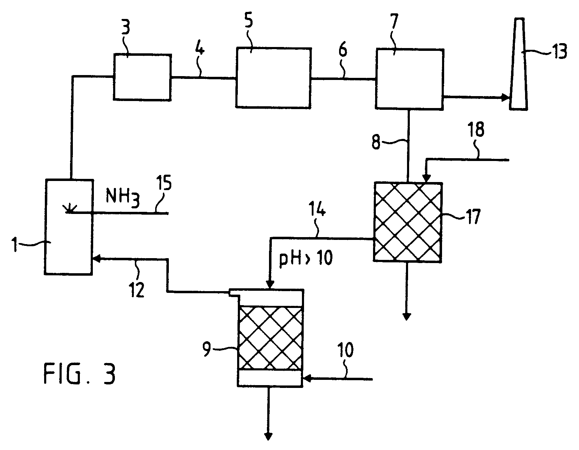

Mit einer Anlage nach Fig. 3 kann ebenfalls erreicht werden, dass das in der Nass-Waschanlage 7 abgeschiedene Ammoniak in der Lösung als Ammoniak vorliegt, indem das Ammonium mittels eines selektiven Ionentauschers 17 aus dem Waschwasser abgeschieden und der Ionenaustauscher mit einer, durch eine Zuleitung 18 eingeleiteten geeigneten Lösung z.B. Kalk-Natriumchlorid rückgespült und die Rückspüllösung durch eine Leitung 14 der Strippkolonne 9 zugeleitet wird, wobei der pH-Wert der Rückspüllösung gemäss des vorangegangenen Beispiels auf einen Wert grösser als 10 angehoben wird.

Durch das in den Anlagen nach Fig. 1, 2 und 3 durchgeführte Verfahren wird erreicht, dass die Stickoxid-Abscheidestufe mit hohem Ammoniaküberschuss betrieben werden kann, wodurch der Stickoxid-Abscheidegrad nahezu beliebig gesteigert werden kann. Zudem wird bewirkt, dass das überschüssige Ammoniak, welches mit den Stickoxiden in dem Nass-Rauchgaswäscher nicht reagiert hat, durch die Abscheidung und Rückführung in den Ofen 1 erneut analog dem SNCR-Verfahren verwendet werden kann. Dort trägt es weiderum zur Stickoxid-Reduktion bei und vermindert so den Ammoniakverbrauch der Anlage in nicht unbeträchtlichen Masse.

**Patentansprüche**

1. Verfahren zur Rückgewinnung von Ammoniak beim Abscheiden von Stickoxiden $NO_x$ aus bei der Verbrennung von Materialien, insbesondere von fossilen Brennstoffen in einer Feuerungsanlage entstehenden Rauchgasen, wobei in einer Reaktionszone in den Rauchgasstrom als reduzierendes Gas Ammoniak NH₃ eingeleitet wird, durch welches die Stickoxidgase zu elementarem Stickstoff $N_2$ reduziert werden, wobei der Rauchgasstrom einer Nass-Rauchgaswäsche unterworfen wird, welche nach der Reaktionsphase durchgeführt wird, wobei durch das Waschwasser das nichtreagierte Ammoniak bzw. Ammoniumchlorid aus dem Rauchgas entfernt wird, dadurch gekennzeichnet, dass der pH-Wert des Waschwassers, welches bei der Nassrauchgaswäsche durch Ammoniak NH₃ und Ammonium NH₄ angereichert wird, auf mehr als 10 angehoben wird und dann das Ammoniak durch in das Waschwasser eingeleitete Luft ausgetrieben wird.

2. Verfahren nach Anspruch 1, dadurch gekennzeichnet, dass zur Entfernung des Ammoniak aus dem Waschwasser dem Waschwasser Kalk zugegeben wird, worauf dann das Ammoniak mittels in das Waschwasser eingeleiteter Luft in einer Strippkolonne ausgetrieben wird.

3. Verfahren nach Anspruch 2, dadurch gekennzeichnet, dass das Waschwasser einem selektiven Ionentauscher zugeführt und das Ammoniak durch Rückspülen des Ionentauschers mit z.B. einer Kalk-Natriumchlorid-Lösung in eine höher konzentrierte Form überführt wird und dann mittels eingeleiteter Luft in einer Strippkolonne ausgetrieben wird.

4. Verfahren nach einem der Ansprüche 1 - 3, dadurch gekennzeichnet, dass die durch das Waschwasser geleitete und dadurch mit Ammoniak angereicherte Luft bzw. die Luft aus der Strippkolonne der dem Reaktionsraum vorgeschalteten Feuerung als Verbrennungsluft zugeleitet wird.

5. Verfahren nach einem der Ansprüche 1 bis 3, dadurch gekennzeichnet, dass die durch das Waschwasser geleitet und dadurch mit Ammoniak angereicherte Luft bzw. die Luft aus der Strippkolonne der Feuerungsanlage als Sekundärluft zugeleitet wird.

6. Verfahren nach einem der Ansprüche 1 bis 3, dadurch gekennzeichnet, dass die durch das Waschwasser geleitete und dadurch mit Ammoniak angereicherte Luft bzw. die Luft aus der Strippkolonne vor dem Reaktionsraum, in welchem ein Katalysator eingebaut ist, dem Rauchgasstrom zugemischt wird.

7. Feuerungsanlage mit einem Ofen (1), einem Kessel (3) und einer Nass-Rauchgaswaschanlage (7) zur Rückgewinnung von Ammoniak beim Abscheiden von Stickoxiden NO$_x$ aus bei der Verbrennung fossiler Brennstoffe und anderen Materialien entstehenden Rauchgasen, mit einer im Ofen (1) oder in der Austrittsleitung (4) des Kessels (3) vorgesehenen Zuleitung (15) zur Einleitung von Ammoniak NH₃ in den Rauchgasstrom, dadurch gekennzeichnet, dass die der Zuleitung (15) nachgeschaltete Nass-Rauchgaswaschanlage (7) durch eine Verbindungsleitung (8), in welche eine Kalkzuleitung (16) mündet, mit einer Strippkolonne (9) verbunden ist, an welcher eine Luftzuleitung (10) mündet und ein Luftaustritt (11) angeschlossen ist, welcher mit einer Zuleitung (12) zum Ofen (1) verbunden ist.

8. Anlage nach Anspruch 7, dadurch gekennzeichnet, dass zwischen der Rauchgasaustrittsleitung (4) des Kessels (3) und der Eintrittsseite der Nass-Rauchgaswaschanlage (7) ein Reaktionsraum (5), z.B. mit Katalysatoren, zur Reduktion der Stickoxidgase NO$_x$ angeordnet ist.

9. Anlage nach Anspruch 7 oder 8, dadurch gekennzeichnet, dass zwischen der Rauchgaswaschanlage (7) und der Strippkolonne (9) anstelle der Kalkzuleitung (16) ein selektiver Ionentauscher (17) eingebaut ist, in welchen eine Rückspülleitung (18) mündet und welcher über eine Verbindungsleitung (14) mit der Strippkolonne (9) verbunden ist, an welcher die Luftleitung (10) mündet und der Luftaustritt (11) angeschlossen ist.

**Claims**

1. Method for the recovery of ammonia during the extraction of nitric oxides NO$_x$ from flue gases arising in a firing installation during the combustion of materials, particularly fossil fuels, wherein in a reaction zone ammonia NH₃ is introduced into the current of flue gas as a reducing gas, by means of which the nitric oxide gases are reduced to elementary nitrogen N₂, wherein the current of flue gas is subjected to a wet flue gas wash which is carried out after the reaction phase, wherein the non-reacted ammonia or ammonium chloride is removed from the flue gas by means of the wash water, characterized in that the pH-value of the wash water, which is enriched during the wet flue gas wash by ammonia NH₃ and ammonium NH₄, is increased to more than 10 and the ammonia is then expelled by air introduced into the wash water.

2. Method according to claim 1, characterized in that for the removal of the ammonia from the wash water lime is added to the wash water, whereupon the ammonia is then expelled in a stripping column by means of air introduced into the wash water.

3. Method according to claim 2, characterized in that the wash water is supplied to a selective ion exchanger and the ammonia is converted into a more concentrated form by back-flushing of the ion exchanger with, for example, a lime and sodium chloride solution and is then expelled in a stripping column by introducing air.

4. Method according to one of claims 1 - 3, characterized in that the air passed through the wash water and thereby enriched with ammonia or the air from the stripping column is fed as combustion air to the firing equipment connected before the reaction chamber.

5. Method according to one of claims 1 to 3, characterized in that the air passed through the wash water and thereby enriched with ammonia or the air from the stripping column is fed as secondary air to the firing installation.

6. Method according to one of claims 1 to 3, characterized in that the air conducted through the wash water and thereby enriched with ammonia or the air from the stripping column is mixed with the current of flue gas before the reaction chamber, in which a catalyst is installed.

7. Firing installation having a furnace (1), a tank (3) and a wet flue gas washing installation (7) for the recovery of ammonia during the extraction of nitric oxides $NO_x$ from flue gases arising during the combustion of fossil fuels and other materials, having a supply line (15) provided to the furnace (1) or to the outlet line (4) of the tank (3) for the introduction of ammonia $NH_3$ into the current of flue gas, characterized in that the wet flue gas washing installation (7) connected after the supply line (15) is connected to a stripping column (9) by means of a connection line (8), into which a lime supply line (16) opens, at which stripping column (9) an air supply line (10) opens and to which there is attached an air outlet (11), which is connected by a supply line (12) to the furnace (1).

8. Installation according to claim 7, characterized in that between the flue gas outlet line (4) of the tank (3) and the inlet side of the wet flue gas washing installation (7) a reaction chamber (5) is arranged, for example with catalysts, for the reduction of the nitric oxide gases $NO_x$.

9. Installation according to claim 7 or 8, characterized in that between the flue gas washing installation (7) and the stripping column (9), in place of the lime supply line (16), a selective ion exchanger (17) is installed, into which a back-flushing line (18) opens and which is connected via a connection line (14) to the stripping column (9), into which the air line (10) opens and to which the air outlet (11) is attached.

## Revendications

1. Procédé de récupération d'ammoniac lors de la séparation des oxydes d'azote $NO_x$ contenus dans les fumées résultant de la combustion de matières, notammant de combustibles fossiles, dans une installation de combustion, dans lequel il est introduit, dans une zone de réaction, dans le courant des fumées, de l'ammoniac $NH_3$, en tant que gaz réducteur par lequel les gaz d'oxyde d'azote sont réduits en azote élémentaire $N_2$, dans lequel le courant des fumées est soumis à un lavage des fumées par voie humide, effectué après la phase de réaction, dans lequel l'ammoniac ou le chlorure d'ammonium n'ayant pas réagi est éliminé des fumées par l'eau de lavage, caractérisé en ce que le pH de l'eau de lavage qui, lors du lavage des fumées par voie humide, est enrichi en ammoniac $NH_3$ et ammonium $NH_4$, est relevé à plus de 10 et en ce qu'ensuite l'ammoniac est chassé par l'air introduit dans l'eau de lavage.

2. Procédé selon la revendication 1, caractérisé en ce que pour éliminer l'ammoniac de l'eau de lavage, on lui ajoute de la chaux, après quoi l'ammoniac est chassé dans une colonne de stripage au moyen de l'air introduit dans l'eau de lavage.

3. Procédé selon la revendication 2, caractérisé en ce que l'eau de lavage est envoyée dans un échangeur d'ions sélectif et l'ammoniac est transformé sous une forme plus concentrée, par lavage à contre-courant de l'échangeur d'ions avec, par exemple, une solution de chlorure de sodium et de chaux, puis est chassé dans une colonne de stripage par introduction d'air.

4. Procédé selon l'une des revendications 1 à 3, caractérisé en ce que l'air envoyé à travers l'eau de lavage et de ce fait enrichi en ammoniac ou l'air provenant de la colonne de stripage est envoyé au foyer situé en amont de l'enceinte de réaction, en tant qu'air de combustion.

5. Procédé selon l'une des revendications 1 à 3, caractérisé en ce que l'air envoyé à travers l'eau de lavage et de ce fait enrichi en ammoniac ou l'air provenant de la colonne de stripage, est envoyé à l'installation de combustion, en tant qu'air secondaire.

**6.** Procédé selon l'une des revendications 1 à 3, caractérisé en ce que l'air envoyé à travers l'eau de lavage et de ce fait enrichi en ammoniac ou l'air provenant de la colonne de stripage en amont de l'enceinte de réaction dans laquelle est monté un catalyseur, est mélangé au courant des fumées.

**7.** Installation de combustion comportant un four (1), une chaudière (3) et une installation de lavage des fumées par voie humide (7), destinée à la récupération d'ammoniac lors de la séparation des oxydes d'azote $NO_x$ contenus dans les fumées résultant de la combustion de combustibles fossiles et autres matières, comportant un conduit d'arrivée (15) prévu dans le four (1) ou dans le conduit de sortie (4) de la chaudière (3), pour introduire de l'ammoniac $NH_3$ dans le courant des fumées, caractérisée en ce que l'installation de lavage des fumées par voie humide (7), située en aval du conduit d'arrivée (15), est reliée, par un conduit de liaison (8) dans lequel débouche un conduit d'arrivée de chaux (16), à une colonne de stripage (9) dans laquelle débouche un conduit d'arrivée d'air (10) et à laquelle est raccordée une sortie d'air (11) qui est reliée à un conduit d'arrivée (12) menant au four (1).

**8.** Installation selon la revendication 7, caractérisée en ce qu'il est prévu, entre le conduit de sortie des fumées (4) de la chaudière (3) et le côté entrée de l'installation de lavage des fumées par voie humide (7), une enceinte de réaction (5), par exemple avec des catalyseurs, pour la réduction des gaz d'oxyde d'azote $NO_x$.

**9.** Installation selon la revendication 7 ou 8, caractérisée en ce qu'il est monté, entre l'installation de lavage des fumées (7) et la colonne de stripage (9), au lieu du conduit d'arrivée de chaux (16), un échangeur d'ions sélectif (17) dans lequel débouche un conduit de lavage à contre-courant (18) et qui est relié, par un conduit de liaison (14), à la colonne de stripage (9) dans laquelle débouche le conduit d'air (10) et à laquelle est raccordée la sortie d'air (11).

FIG. 1

FIG. 2

FIG. 3